# EUROPÄISCHE PATENTSCHRIFT

(11) **EP 1 769 160 B1**
(45) Veröffentlichungstag und Bekanntmachung des Hinweises auf die Patenterteilung: **05.12.2007**
(21) Anmeldenummer: 05772349.6
(22) Anmeldetag: 16.07.2005
(51) Int. Cl.: F16B 5/08

(54) **ADAPTER ZUM ANSCHLUSS VON BAUELEMENTEN UNTEREINANDER UND BAUTEIL HERGESTELLT UNTER VERWENDUNG EINES SOLCHEN ADAPTERS**
ADAPTER FOR RESPECTIVE CONNECTION OF COMPONENTS AND ASSEMBLY PRODUCED USING SAID ADAPTER
ADAPTATEUR DESTINE AU RACCORDEMENT DE COMPOSANTS ENTRE EUX, ET ENSEMBLE OBTENU AVEC UTILISATION D'UN TEL ADAPTATEUR

(30) Priorität: 19.07.2004 DE 102004034817
(43) Veröffentlichungstag der Anmeldung: 04.04.2007
(73) Patentinhaber: ThyssenKrupp Steel AG, 47166 Duisburg (DE)
(72) Erfinder: SCHMIDT, Mario, 47441 Moers (DE)
(74) Vertreter: Simons, Johannes
(86) Internationale Anmeldenummer: PCT/EP2005/007771
(87) Internationale Veröffentlichungsnummer: WO 2006/008105

(56) Entgegenhaltungen:
- WO-A-94/20255
- WO-A-97/21506

## Beschreibung

Die Erfindung betrifft einen Adapter zum Anschluss eines aus einem ersten Werkstoff bestehenden Bauelements an ein aus einem zweiten Werkstoff bestehendes Bauelement. Darüber hinaus betrifft die Erfindung ein Bauteil, hergestellt aus einem ersten Bauelement, das aus einem ersten Werkstoff besteht, und aus einem zweiten Bauelement, das aus einem zu einer anderen Werkstoffgruppe als der Werkstoff des ersten Bauelements gehörenden Werkstoff gefertigt ist.

Ein solcher Adapter ist aus dem Dokument WO94/20255 A schon bekannt.

Insbesondere im Bereich des Karosseriebaus, aber auch in anderen Bereichen der Technik, bei denen aus unterschiedlichen Werkstoffen hergestellte Bauelemente miteinander verbunden werden müssen, besteht häufig das Problem, dass sich die betreffenden Werkstoffe nicht in geeigneter Weise so miteinander verbinden lassen, dass einerseits die an die Festigkeit der Verbindung gestellten Anforderungen erfüllt werden und andererseits eine Verbindungsart gewählt werden kann, die sich einfach herstellen lässt und gleichzeitig die im sichtbaren Bereich an das optische Erscheinungsbild des Verbindungsbereichs gestellten Anforderungen erfüllt. So lassen sich beispielsweise aus einem Leichtmetallwerkstoff, wie einer Aluminium- oder Magnesiumlegierung, bestehende Karosseriebleche in der Regel nicht mit der Tragstruktur des jeweiligen Fahrzeugs verschweißen, wenn diese aus einem Stahl gefertigt ist. Dieses Problem macht es schwierig, die Vorzüge der unterschiedlichen Werkstoffe, nämlich das geringe Gewicht des für die Außenhaut oder die sonstigen Strukturen des jeweiligen Fahrzeugs eingesetzten Leichtmetalls einerseits und die hohe Festigkeit von Stahl für die Herstellung der hochbelasteten Karosserieteile andererseits, in Kombination miteinander zu nutzen. Dieselbe Problematik stellt sich, wenn Kunststoffteile mit Metallteilen verbunden werden sollen.

Es ist zwar versucht worden, den Anschluss von aus unterschiedlichen Werkstoffen hergestellten Bauelementen aneinander durch Klebverbindungen zu erreichen. Diese Verbindungen sind den in der Praxis auftretenden Belastungen jedoch häufig nicht gewachsen. Dies gilt beispielsweise dann, wenn ein aus einem leichten Werkstoff gefertigtes Blechteil mit einem aus einem festen Werkstoff erzeugten Profil verbunden werden soll. Die im Bereich der Klebstelle auftretenden Spannungen können insbesondere nach längerem Gebrauch zu einer Schwächung der Klebverbindung führen.

Alternativ oder ergänzend zu einer Verklebung lassen sich aus unterschiedlichen, miteinander nicht verschweißbaren Werkstoffen bestehende Bauteile auch durch eine kraft- und formschlüssige Verbindung aneinander anschließen. So können Leichmetall- oder Kunststoffteile beispielsweise mit einem aus Stahl gefertigten Bauelement vernietet oder verschraubt werden. Im Bereich des Karosserie- oder sonstigen Gehäusebaus weist diese Art der Verbindung jedoch häufig den Nachteil auf, dass die Verbindungselemente von außen sichtbar sind und das optische Erscheinungsbild des jeweiligen Produkts stören. Darüber hinaus ist die Herstellung von kraftschlüssigen Verbindungen im voll- oder teilautomatisierten Herstellungsbetrieb häufig nur mit erhöhtem apparativen Aufwand zu bewerkstelligen und dementsprechend teuer.

Eine weitere Möglichkeit, Bauteile aus unterschiedlichen, nicht miteinander verschweißbaren Werkstoffen herzustellen, ist aus der EP 0 868 237 B1 bekannt. In dieser Patentschrift wird ein Verfahren zur Erzeugung von Metallprofilen vorgestellt, das aus mindestens zwei gefügten Teilen erzeugt wird, die ausschließlich durch Klemmkraft untereinander verbunden sind.

Die Herstellung der bekannten Metallprofile erfolgt dabei in der Weise, dass zunächst in einem der zu fügenden Teile eine Nut eingeformt wird. Bei dieser Einformung findet eine Gefügeveränderung in der näheren Umgebung der Nut statt. Dann wird in diese Nut ein anderes aus Flachmaterial bestehendes Teil mit seiner Schmalseite eingesetzt und in der Nut durch Verquetschen des der Nut benachbarten Materials in dem einen Teil festgeklemmt. Dabei findet eine weitere Gefügeveränderung statt, so dass eine ausschließlich kraft- und formschlüssige Verbindung zwischen den beiden aneinander anzuschließenden Teilen hergestellt ist. Auf diese Weise lassen sich Teile aus beliebigen Metallen fügen, für die andere Fügetechniken, sei es aus Gründen der Materialkombination, sei es aus anderen Gründen, nicht geeignet oder optimal sind.

Ein Nachteil der aus der EP 0 868 237 B1 bekannten Vorgehensweise besteht darin, dass sie mindestens in dem Bereich des Elements, in das die Fuge eingeformt wird, eine bestimmte Materialstärke voraussetzt. Darüber hinaus ist gemäß dem bekannten Verfahren eine ausreichende Verformbarkeit des mit der Nut versehenen Bauelements im an die Nut angrenzenden Bereich erforderlich. Schließlich kann das Einformen der Nut in das eine Element, das Einsetzen des anderen Elements in die Nut und das anschließende Anpressen des Werkstoffs nur in einem komplexen Fertigungsvorgang durchgeführt werden. Dieser eignet sich insbesondere nicht für den Anschluss von großflächigen Karosserieaußenteilen geringer Wandstärke an ein Tragprofil, dessen Wandungen im Vergleich zur Stärke des betreffenden Außenteils wesentlich dicker ist.

Ausgehend von dem voranstehend erläuterten Stand der Technik lag der Erfindung die Aufgabe zugrunde, ein Mittel zu schaffen, das auf einfache Weise die sichere Verbindung von zwei aus unterschiedlichen Werkstoffen gefertigten Bauelementen ermöglicht. Darüber hinaus soll ein Bauteil angegeben werden, das sich auf besonders einfache Weise aus Bauelementen, die aus unterschiedlichen Werkstoffen bestehen, herstellen lässt.

In Bezug auf das Verbindungsmittel wird diese Aufgabe durch einen zum Anschluss eines aus einem ersten Werkstoff bestehenden Bauelements an einen aus einem zweiten Werkstoff bestehenden Bauelement bestimmten Adapter gelöst, der erfindungsgemäß dadurch gekennzeichnet ist, dass er ein Grundelement, das aus einem Werkstoff hergestellt ist, der zur Gruppe der Werkstoffe gehört, der dem Werkstoff des ersten Bauelements zugeordnet ist, und ein durch eine Fügeoperation kraft- und formschlüssig und unlösbar mit dem Grundelement verbundenes Anschlusselement aufweist, das aus einem Werkstoff hergestellt ist, der zur Gruppe der Werkstoffe gehört, denen der Werkstoff des zweiten Bauelements zugeordnet ist.

Mit dem erfindungsgemäßen Adapter steht ein Mittel zur Verfügung, mit dem sich aus unterschiedlichsten Werkstoffen bestehende Bauelemente sicher und auf einfache Weise miteinander verbinden lassen. Ein solcher Adapter kann problemlos vorproduziert werden und ermöglicht so die einfache und kostengünstig mit geringem technischen Aufwand durchführbare Montage von Bauelementen, die aus unterschiedlichen, miteinander nicht kompatiblen Werkstoffen bestehen.

Die Erfindung macht sich dabei die aus der EP 0 868 237 B1 im Grundsatz bekannte Vorgehensweise zu Nutze. So sieht sie bei dem erfindungsgemäßen Adapter ein Grundelement vor, in das das Anschlusselement beispielsweise durch Anwendung des aus der EP 0 868 237 B1 bekannten oder eines vergleichbaren Verfahrens eingefügt wird. Das Grundelement besteht dabei aus einem Werkstoff, der kompatibel ist mit dem Werkstoff, aus dem das eine der miteinander zu verbindenden Bauelemente hergestellt ist, während das Anschlusselement aus einem Werkstoff besteht, der zur Gruppe der Werkstoffe gehört, aus denen das andere der Bauelemente gefertigt ist. Dadurch, dass er aus Bauelementen gefertigt ist, die jeweils aus gleichen oder nahe verwandten Werkstoffen bestehen, wie die ihnen bei der Montage jeweils zugeordneten Bauelemente, kann der erfindungsgemäße Adapter problemlos mit den beiden Bauteilen stoffschlüssig verbunden werden. Im Ergebnis wird so erreicht, dass einerseits der Adapter mit den aneinander anzuschließenden Bauteilen fest verbunden ist und andererseits die Bauteile untereinander über die Fügezone des Adapters fest und sicher aneinander angeschlossen sind.

Dementsprechend sieht eine besonders praxisgerechte Ausgestaltung der Erfindung vor, dass das Grundelement eine Nut aufweist, in die ein Abschnitt des Anschlusselements gestellt ist, und dass die Ränder der Nut mindestens abschnittsweise durch eine gefügeverändernde Operation so gegen den in der Nut stehenden Abschnitt des Anschlusselements gedrückt sind, dass die kraft- und formschlüssige Verbindung zwischen dem Grundelement und dem Anschlusselement hergestellt ist.

In Bezug auf ein Bauteil, das aus einem ersten Bauelement, das aus einem ersten Werkstoff besteht, und aus einem zweiten Bauelement, das aus einem zu einer anderen Werkstoffgruppe als der Werkstoff des ersten Bauelement gehörenden Werkstoff gefertigt ist, besteht, wird die voranstehend genannte Aufgabe dementsprechend dadurch gelöst, dass die Bauelemente durch einen erfindungsgemäß ausgebildeten Adapter miteinander verbunden sind.

Mit Hilfe des erfindungsgemäßen Adapters lassen sich in besonders einfacher Weise beispielsweise Bauteile, bei denen das eine Bauelement aus einem Stahlwerkstoff und das andere Bauelement aus einem Leichtmetallwerkstoff hergestellt ist, miteinander verbinden. Auf genauso einfache Weise lässt sich mit einem erfindungsgemäßen Adapter jedoch beispielsweise auch ein aus einem Kunststoff bestehendes Bauelement an ein aus einem Stahl- oder Leichtmetall-Werkstoff bestehendes Element anschließen. Diese Eigenschaften machen den erfindungsgemäßen Adapter besonders geeignet zum Anschluss von Teilen der Außenhaut oder sonstigen Strukturbauteilen einer Karosserie an ein der Tragstruktur des jeweiligen Fahrzeugs zugeordnetes Bauteil. So lassen sich mit einem erfindungsgemäßen Adapter problemlos Strukturkomponenten, wie außen oder innen liegende Bleche, einer Fahrzeugkarosserie, die aus einer besonders leichten Aluminium- oder Magnesiumlegierung bestehen, auf einfache Weise mit aus einem hochfesten Stahl oder anderen Werkstoffen bestehenden Profilen der Tragstruktur des Fahrzeugs verbinden. Da die Verbindung zwischen dem Außenblechteil und dem Adapter geschweißt werden kann, sind im Bereich der Verbindung zwischen Adapter und Außenblech keine den optischen Eindruck störende Verbindungselemente erforderlich. Darüber hinaus ist es auch nicht erforderlich, an dem Außenblechteil oder dem Profil besondere Formelemente für den Anschluss an den Adapter auszubilden.

Weitere vorteilhafte Ausgestaltungen der Erfindung sind in den abhängigen Ansprüchen angegeben und werden nachfolgend im Zusammenhang mit den in der Zeichnung dargestellten Ausführungsbeispielen näher erläutert.

Die Figuren zeigen jeweils schematisch in einer perspektivischen Ansicht vier Verbindungen V1, V2, V3, V4 zwischen einem nur im Ausschnitt gezeigten dünnen Außenblech A1,A2,A3,A4 und jeweils einem Trägerprofil T1,T2,T3,T4 einer weiter nicht dargestellten Fahrzeugkarosserie.

Die Außenbleche A1,A2,A3,A4 bilden jeweils das erste Bauelement eines Karosseriebauteils, dessen zweites Bauelement durch das jeweilige Trägerprofil T1,T2,T3,T4 gebildet ist. Die Außenbleche A1,A2,A3,A4 bestehen dabei beispielsweise aus einem Aluminium- oder einem Magnesium-Werkstoff, während die Trägerprofile T1,T2,T3,T4 beispielsweise jeweils aus einem hochfesten, den im praktischen Einsatz des jeweiligen Fahrzeugs auftretenden Belastungen sicher standhaltenden Stahllegierung gefertigt sind.

Die Verbindung zwischen dem jeweiligen Außenblech A1, A2, A3, A4 mit dem ihm jeweils zugeordneten Trägerprofil T1,T2,T3,T4 ist durch jeweils einen Adapter 1,2,3,4 hergestellt. Jeder der Adapter 1,2,3,4 weist jeweils ein plattenförmiges Grundelement 5,6,7,8 auf, das dem jeweiligen Außenblech A1,A2,A3,A4 zugeordnet ist und aus demselben Leichtmetallwerkstoff besteht wie das betreffende Außenblech A1,A2,A3,A4.

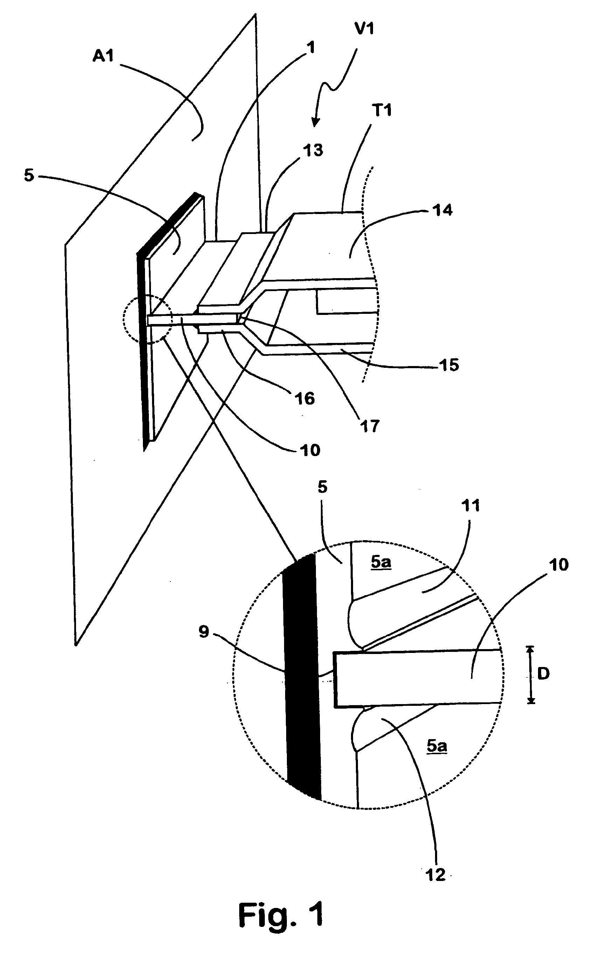

Bei der Herstellung des für die Verbindung V1 (Fig. 1) eingesetzten Adapters 1 ist in das Grundelement 5 eine sich quer über das Grundelement 5 erstreckende Nut 9 eingeformt worden. Die Breite der Nut 9 entsprach dabei der Dicke D eines ebenfalls plattenförmigen Anschlusselements 10, das mit seiner Schmalseite in die Nut 9 eingesetzt worden ist. Das Anschlusselement 10 besteht aus einem gut mit dem Stahl des Trägerprofils T1 verschweißbaren Stahlwerkstoff.

Nach dem Einsetzen in die Nut 9 sind unter hohem Anpressdruck nicht dargestellte Anpressrollen mit geringem Abstand zur Nut 9 entlang dieser Nut 9 über die dem Anschlusselement 10 zugeordnete Oberfläche 5a des Grundelements 5 bewegt worden. Der von den Anpressrollen ausgeübte Anpressdruck war dabei so hoch, dass aus den diesem Druck ausgesetzten, nach der Verformung rillenförmig ausgebildeten und sich parallel zur Nut 9 erstreckenden Bereichen 11,12 des Grundelements 5 Material in Richtung der Nut 9 geflossen ist, so dass die Seitenflächen der Nut 9 mit hoher Anpresskraft auf die ihnen jeweils zugeordneten Oberflächenabschnitte des Anschlusselements 10 wirken. Die auf diese Weise erzeugte kraft- und formschlüssige Verbindung zwischen Anschlusselement 10 und Grundelement 5 ist so fest, dass das Anschlusselement 10 auch unter hoher Wechselbelastung dauerhaft fest in dem Grundelement 5 gehalten ist.

Das Trägerprofil T1 weist einen I-förmigen Querschnitt auf. An sein dem Adapter 1 zugeordnetes Ende ist ein Anschlussstück 13 angeformt, indem der Oberzug 14 und der Unterzug 15 des Trägerprofils T1 ausgehend von ihrer beabstandeten Normalposition zunächst schräg aufeinander zulaufen, um dann wieder über einen kurzen Abschnitt 16 parallel zueinander zu verlaufen. Die Höhe des auf diese Weise im Bereich des Abschnitts 16 zwischen dem Oberzug 14 und dem Unterzug 15 des Trägerprofils T1 gebildeten Spalts 17, entspricht dabei im Wesentlichen der Dicke D des Anschlusselements 10 des Adapters 1.

Zum Anschluss des Außenblechs A1 an das Trägerprofil T1 wird zunächst das Grundelement 5 des Adapters 1 mit dem Außenblech 1 verschweißt, so dass Außenblech 1 und Adapter stoffschlüssig fest miteinander verbunden sind. Anschließend wird das Anschlusselement 10 des Adapters 1 mit seiner vom Grundelement 5 abgewandten Schmalseite in den Spalt 17 des Trägerprofils T1 geschoben. Daraufhin können das Trägerprofil T1 und das Anschlusselement 10 im Bereich der auf diese Weise gebildeten Überlappung auf einfache Weise sicher miteinander verschweißt werden, so dass auch das Trägerprofil T1 und der Adapter 1 stoffschlüssig fest miteinander verbunden sind. Der Anschluss vom Außenblech A1 und an das Trägerprofil T1 ist dabei durch die im Bereich der Nut 9 vorhandene kraft- und formschlüssige Verbindung zwischen Anschlusselement 10 und Grundelement 5 gewährleistet.

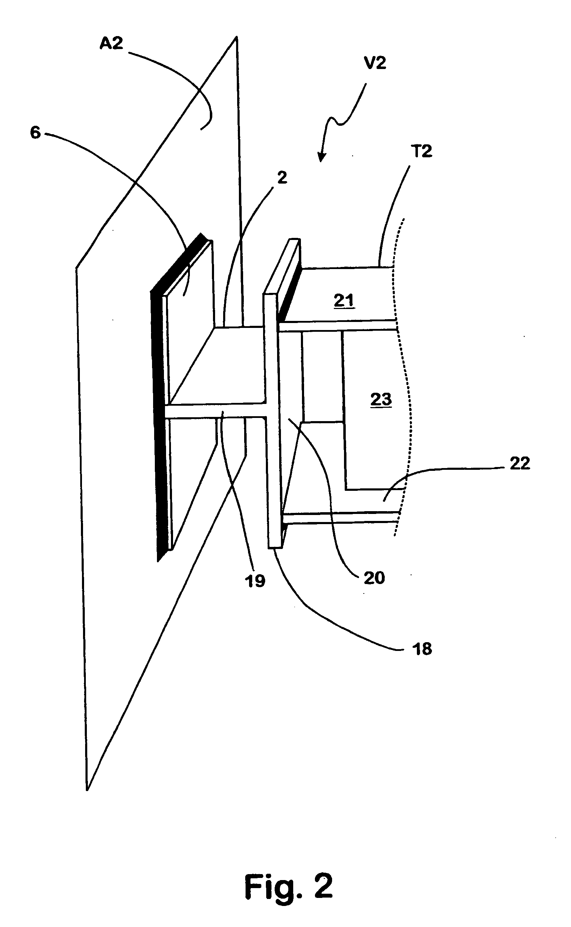

Bei dem für die Verbindung V2 (Fig. 2) verwendeten Adapter 2 ist das Anschlusselement 18 nicht plattenförmig, sondern nach Art eines T-Profils ausgebildet. Die freie Schmalseite des Stegs 19 des Anschlusselements 18 ist dabei in derselben Weise, wie es voranstehend für das Fügen des Anschlusselements 10 und des Grundelements 5 in der Nut 9 des Adapters 1 beschrieben worden ist, mit der Grundplatte 6 des Adapters 2 kraft- und formschlüssig fest verbunden.

Die vom Steg 19 abgewandte freie Anschlussfläche 20 des Anschlusselements 18 kann so zum Anschluss des jeweiligen Trägerprofils T2 genutzt werden. Auch das Anschlusselement 18 besteht dabei aus einem Stahlwerkstoff, der sich besonders gut mit dem Stahl des Trägerprofil T2 verschweißen lässt.

Bei der Verbindung V2 weist dieses Trägerprofil T2 ebenfalls einen I-förmigen Querschnitt auf. Um einen einfachen Anschluss an den Adapter zu ermöglichen, sind der Oberzug 21 und der Unterzug 22 an dem dem Adapter 2 zugeordneten Ende des Trägerprofils T2 über dessen Steg 23 hinaus so verlängert, so dass sie stumpf an der Anschlussfläche 20 des Anschlusselements 18 anliegen und dort auf einfache Weise mit dem Anschlusselement 18 verschweißt werden können. Das Grundelement 6 des Adapters 2 ist gleichzeitig mit dem Außenblech A2 verschweißt, so dass auch bei der Verbindung V2 das Außenblech A2 über die kraft- und formschlüssige Verbindung zwischen Grundelement 6 und Anschlusselement 18 des Adapters 2 fest miteinander verbunden sind.

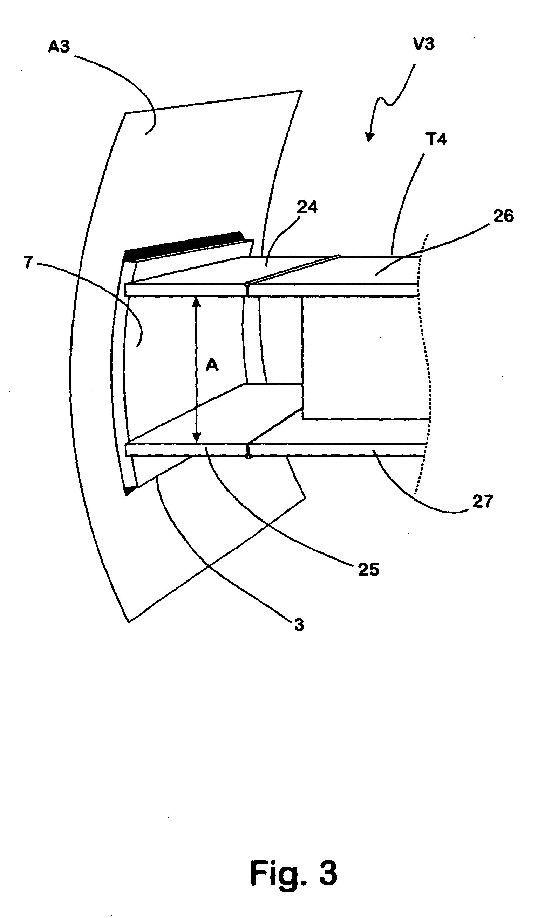

Bei der Verbindung V3 (Fig. 3) ist das mit dem Außenblech A3 zu verbindende Ende des Trägerprofils T3 genauso ausgebildet wie das dem Außenblech A2 zugeordnete Ende des Trägerprofils T2. Da das Außenblech A3 im Bereich der Verbindung V3 gewölbt ausgebildet ist, ist das plattenförmige Grundelement 7 des für die Verbindung V3 eingesetzten Adapters 3 in entsprechender Weise so gewölbt ausgebildet, dass bei an dem Außenblech A3 angesetztem Adapter 3 das Grundelement 7 dicht an dem Außenblech A4 anliegt.

Zum Anschluss an das Trägerprofil T3 weist der Adapter 3 zwei plattenförmige, aus demselben gut verschweißbaren Stahlwerkstoff wie das Trägerprofil T3 bestehende Anschlusselemente 24,25 auf, die parallel zueinander in einem dem Abstand des Oberzugs 26 zum Unterzug 27 des Trägerprofils T3 entsprechenden Abstand A angeordnet sind. Auch die Anschlusselemente 24,25 sind jeweils in derselben Weise mit dem Grundelement 7 des Adapters 3 zusammengefügt, wie es für die Verbindung zwischen dem Grundelement 5 und dem Anschlusselement 10 des Adapters 1 voranstehend beschrieben worden ist.

Zum Anschließen des Außenblechs A3 an das Trägerprofil T3 wird zunächst der Adapter 3 mit seinem Grundelement 7 an das Außenblech A3 angesetzt und mit ihm verschweißt. Anschließend wird der Adapter 3 mit dem Außenblech A3 an das Ende des Trägerprofils T3 so angesetzt, das die freien, vom Grundelement 7 abgewandten Enden seiner Anschlusselemente 24,25 stumpf gegen die freien Enden des Oberzugs 26 und des Unterzugs 27 des Trägerprofils T3 stoßen. Im Bereich des so gebildeten Stoßes können anschließend der Adapter 3 und das Trägerprofil T3 problemlos miteinander verschweißt werden.

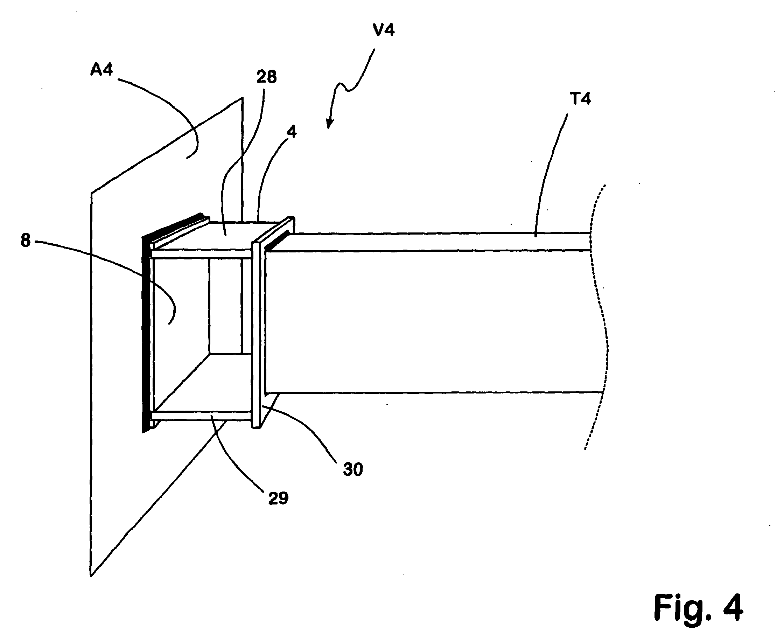

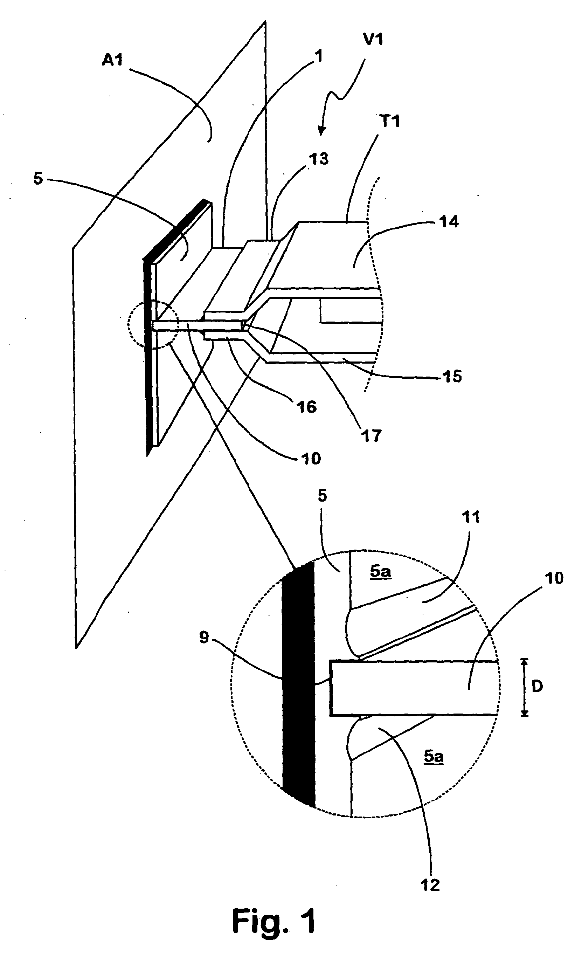

Der für die Verbindung V4 (Fig. 4) eingesetzte Adapter 4 weist neben dem aus demselben Werkstoff wie das Außenblech A4 bestehenden und mit diesem verschweißten plattenförmigen Grundelement 8 entsprechend den beim Adapter 3 vorhandenen Anschlusselementen 24,25 ausgebildete und mit dem Grundelement 8 kraft- und formschlüssig verbundene Anschlusselemente 28,29 auf. Im Unterschied zum Adapter 3 tragen diese Anschlusselemente 28,29 beim Adapter 4 mit ihrem vom Grundelement 8 abgewandten Ende jedoch eine Anschlussplatte 30, die aus einem Stahlwerkstoff besteht, der gut mit dem Stahlwerkstoff des Trägerprofils T4 verschweißbar ist. Die plattenförmigen Anschlusselemente 28,29 können dabei aus demselben Werkstoff bestehen, wie die Anschlussplatte 30 und mit dieser verschweißt sein.

Alternativ ist es jedoch auch möglich, die Anschlusselemente 28,29 aus einem anderen Werkstoff zu fertigen und sie beispielsweise ebenfalls nach dem Muster der Verbindung zwischen ihnen und dem Grundelement 8 mit der Anschlussplatte 30 zu verbinden. In diesem Fall können die Anschlusselemente 28,29 beispielsweise aus einem elastischen Material bestehen, das die Übertragung von Vibrationen vom Trägerprofil T4 auf das mit ihm zu verbindende Außenblech A4 verhindert.

Die Anschlussplatte 30 ermöglicht dabei den problemlosen Anschluss von rohrförmigen Trägerprofilen T4 an den Adapter 4. Das Trägerprofil T4 wird dazu mit seinem freien Ende stumpf gegen die Anschlussplatte 30 des Adapters gesetzt, so dass im Bereich des so gebildeten Stoßes eine einfache Verschweißung vorgenommen werden kann.

## Patentansprüche

1. Adapter zum Anschluss eines aus einem ersten Werkstoff bestehenden Bauelements (A1,A2,A3,A4) an ein aus einem zweiten Werkstoff bestehendes Bauelement (T1,T2,T3,T4), **dadurch gekennzeichnet, dass** er ein Grundelement (5,6,7,8), das aus einem Werkstoff hergestellt ist, der zur Gruppe der Werkstoffe gehört, der dem Werkstoff des ersten Bauelements (A1,A2,A3,A4) zugeordnet ist, und ein durch eine Fügeoperation kraft- und formschlüssig unlösbar mit dem Grundelement (5,6,7,8) verbundenes Anschlusselement (10,19,24,25,28,29) aufweist, das aus einem Werkstoff hergestellt ist, der zur Gruppe der Werkstoffe gehört, denen der Werkstoff des zweiten Bauelements (T1, T2, T3, T4) zugeordnet ist.

2. Adapter nach Anspruch 1, **dadurch gekennzeichnet, dass** das Grundelement (5,6,7,8) eine Nut (9) aufweist, in die ein Abschnitt des Anschlusselements (10,19,24,25,28,29) gestellt ist, und dass die Ränder der Nut (9) mindestens abschnittsweise durch eine gefügeverändernde Operation so gegen den in der Nut stehenden Abschnitt des Anschlusselements (10,19,24,25,28,29) gedrückt sind, dass die kraft- und formschlüssige Verbindung zwischen dem Grundelement (5,6,7,8) und dem Anschlusselement (10,19,24,25,28,29) hergestellt ist.

3. Adapter nach einem der voranstehenden Ansprüche, **dadurch gekennzeichnet, dass** das Grundelement (5,6,7,8) eine Platte ist.

4. Adapter nach einem der voranstehenden Ansprüche, **dadurch gekennzeichnet, dass** das Anschlusselement (10,24,25,28,29) eine Platte ist.

5. Adapter nach einem der voranstehenden Ansprüche 1-3, **dadurch gekennzeichnet, dass** das Anschlusselement (1) ein T-Profilstück ist.

6. Adapter nach einem der voranstehenden Ansprüche, **dadurch gekennzeichnet, dass** der mit Bauelementen verwendbar ist, wobei der Werkstoff mindestens eines der Bauelemente (A1,A2,A3,A4,T1,T2,T3,T4) eine Metalllegierung ist.

7. Adapter nach Anspruch 6, **dadurch gekennzeichnet, dass** der mit Bauelementen verwendbar ist, wobei der Werkstoff eines der Bauelemente (A1,A2,A3,A4,T1,T2,T3,T4) ein Kunststoff ist.

8. Adapter nach Anspruch 6, **dadurch gekennzeichnet, dass** der mit Bauelementen verwendbar ist, wobei die Werkstoffe beider Bauelemente (A1,A2,A3,A4,T1,T2,T3,T4) unterschiedlichen Gruppen von Metallen zugeordnet sind.

9. Adapter nach Anspruch 8, **dadurch gekennzeichnet, dass** der mit Bauelementen verwendbar ist, wobei der erste Werkstoff der Bauelemente ein Stahlwerkstoff und der zweite Werkstoff der Bauelemente ein Leichtmetallwerkstoff ist.

10. Adapter nach Anspruch 9, **dadurch gekennzeichnet, dass** der zweite Werkstoff ein Aluminium-Werkstoff ist.

11. Bauteil hergestellt aus einem ersten Bauelement (A1,A2,A3,A4), das aus einem ersten Werkstoff besteht, und aus einem zweiten Bauelement (T1,T2,T3,T4), das aus einem zu einer anderen Werkstoffgruppe als der Werkstoff des ersten Bauelements (A1,A2,A3,A4) gehörendem Werkstoff gefertigt ist, **dadurch gekennzeichnet, dass** die Bauelemente (A1,A2,A3,A4,T1,T2,T3,T4) durch einen gemäß einem der Ansprüche 1 bis 10 ausgebildeten Adapter (1,2,3,4) miteinander verbunden sind.

12. Bauteil nach Anspruch 11, **dadurch gekennzeichnet, dass** das eine Bauelement (T1,T2,T3,T4) aus einem Stahlwerkstoff und das andere Bauelement (A1,A2,A3,A4) aus einem Leichtmetallwerkstoff hergestellt ist.

13. Bauteil nach einem der Ansprüche 11 oder 12, **dadurch gekennzeichnet, dass** das eine Bauelement (A1, A2, A3, A4) ein Blech und das andere Bauelement (T1, T2, T3, T4) ein Profil ist.

## Claims

1. Adapter for the connection of a component (A1, A2, A3, A4) consisting of a first material to a component (T1, T2, T3, T4) consisting of a second material, **characterised in that** it has a basic element (5, 6, 7, 8), which is manufactured from a material which belongs to the group of materials to which the material of the first component (A1, A2, A3, A4) is allocated, and a connection element (10, 19, 24, 25, 28, 29), indissolubly connected by a joint operation in a positive and non-positive manner to the basic element (5, 6, 7, 8), said connection element being manufactured from a material which belongs to the group of materials to which the material of the second component (T1, T2, T3, T4) is allocated.

2. Adapter according to Claim 1, **characterised in that** the basic element (5, 6, 7, 8) has a slot (9), into which a section of the connection element (10, 19, 24, 25, 28, 29) is located, and **in that** the edges of the slot (9) are pressed at least section by section by a structure-altering operation against the section of the connection element (10, 19, 24, 25, 28, 29) located in the slot (9) in such a way that the positive and non-positive connection is formed between the basic element (5, 6, 7, 8) and the connection element (10, 19, 24, 25, 28, 29).

3. Adapter according to either one of the preceding claims, **characterised in that** the basic element (5, 6, 7, 8) is a plate.

4. Adapter according to any one of the preceding claims, **characterised in that** the connection element (10, 24, 25, 28, 29) is a plate.

5. Adapter according to one of the preceding claims 1 - 3, **characterised in that** the connection element (1) is a T-profile piece.

6. Adapter according to any one of the preceding claims, **characterised in that** it can be used with components where the material of at least one of the components (A1, A2, A3, A4, T1, T2, T3, T4) is a metal alloy.

7. Adapter according to Claim 6, **characterised in that** it can be used with components where the material of one of the components (A1, A2, A3, A4, T1, T2, T3, T4) is a plastic.

8. Adapter according to Claim 6, **characterised in that** it can be used with components where the materials of both components (A1, A2, A3, A4, T1, T2, T3, T4) are allocated to different groups of metals.

9. Adapter according to Claim 8, **characterised in that** the first material of the components is a steel material and the second material of the components is a lightweight metal material.

10. Adapter according to Claim 9, **characterised in that** the second material is an aluminium material.

11. Component manufactured from a first component (A1, A2, A3, A4), which consists of a first material, and from a second component (T1, T2, T3, T4), which is manufactured from a material belonging to a material group which is other than the material of the first component (A1, A2, A3, A4), **characterised in that** the components (A1, A2, A3, A4, T1, T2, T3, T4) are connected to one another by an adapter (1, 2, 3, 4) designed in accordance with any one of Claims 1 to 10.

12. Component according to Claim 11, **characterised in that** the one component (T1, T2, T3, T4) is manufactured from a steel material and the other component (A1, A2, A3, A4) is manufactured from a lightweight metal material.

13. Component according to either one of Claims 11 or 12, **characterised in that** the one component (A1, A2, A3, A4) is a sheet, and the other component (T1, T2, T3, T4) is a profile.

## Revendications

1. Adaptateur de raccordement d'un élément de construction (A1, A2, A3, A4), constitué d'un premier matériau, à un élément de construction (T1, T2, T3, T4) constitué d'un deuxième matériau, **caractérisé en ce qu'**il est constitué d'un élément de base (5, 6, 7, 8) formé d'un matériau qui fait partie de l'ensemble de matériaux auquel le matériau du premier élément de construction (A1, A2, A3, A4) est associé et **en ce qu'**il présente un élément de raccordement (10, 19, 24, 25, 28, 29) relié de manière non libérable à l'élément de base (5, 6, 7, 8) en correspondance mécanique et en correspondance géométrique par une opération de jonction, l'élément de raccordement étant réalisé en un matériau qui fait partie de l'ensemble de matériaux auquel le matériau du deuxième élément de construction (T1, T2, T3, T4) est associé.

2. Adaptateur selon la revendication 1, **caractérisé en ce que** l'élément de base (5, 6, 7, 8) présente une rainure (9) dans laquelle est placée une partie de l'élément de raccordement (10, 19, 24, 25, 28, 29) et **en ce qu'**au moins certaines parties des bords de la rainure (9) sont repoussées contre la partie de l'élément de raccordement (10, 19, 24, 25, 28, 29) située dans la rainure par une opération de modification de la jonction de manière à établir la liaison en correspondance mécanique et en correspondance géométrique entre l'élément de base (5, 6, 7, 8) et l'élément de raccordement (10, 19, 24, 25, 28, 29).

3. Adaptateur selon l'une des revendications précédentes, **caractérisé en ce que** l'élément de base (5, 6, 7, 8) est une plaque.

4. Adaptateur selon l'une des revendications précédentes, **caractérisé en ce que** l'élément de raccordement (10, 24, 25, 28, 29) est une plaque.

5. Adaptateur selon l'une des revendications 1 à 3 qui précèdent, **caractérisé en ce que** l'élément de raccordement (1) est une pièce à profil en T.

6. Adaptateur selon l'une des revendications précédentes, **caractérisé en ce qu'**il peut être utilisé avec des éléments de construction, le matériau d'au moins un des éléments de construction (A1, A2, A3, A4, T1, T2, T3, T4) étant un alliage métallique.

7. Adaptateur selon la revendication 6, **caractérisé en ce qu'**il peut être utilisé avec des éléments de construction dans lesquels le matériau d'un des éléments de construction (A1, A2, A3, A4, T1, T2, T3, T4) est une matière synthétique.

8. Adaptateur selon la revendication 6, **caractérisé en ce qu'**il peut être utilisé avec des éléments de construction dans lesquels les matériaux des deux éléments de construction (A1, A2, A3, A4, T1, T2, T3, T4) sont associés à différents groupes de métaux.

9. Adaptateur selon la revendication 8, **caractérisé en ce qu'**il peut être utilisé avec des éléments de construction dans lesquels le premier matériau des éléments de construction est un matériau d'acier et le deuxième matériau des éléments de construction est un matériau en métal léger.

10. Adaptateur selon la revendication 9, **caractérisé en ce que** le deuxième matériau est un matériau d'aluminium.

11. Elément fabriqué à partir d'un premier élément de construction (A1, A2, A3, A4) qui est constitué d'un premier matériau et d'un deuxième élément de construction (T1, T2, T3, T4) fabriqué en un matériau qui fait partie d'un autre groupe de matériaux que le matériau du premier élément de construction (A1, A2, A3, A4), **caractérisé en ce que** les éléments de construction (A1, A2, A3, A4, T1, T2, T3, T4) sont reliés l'un à l'autre par un adaptateur (1, 2, 3, 4) configuré selon l'une des revendications 1 à 10.

12. Élément de construction selon la revendication 11, **caractérisé en ce qu'**un des éléments de construction (T1, T2, T3, T4) est constitué d'un matériau à base d'acier et l'autre élément de construction (A1, A2, A3, A4) est constitué d'un matériau à base de métal léger.

13. Élément de construction selon l'une des revendications 11 ou 12, **caractérisé en ce qu'**un des éléments (A1, A2, A3, A4) est une tôle et l'autre élément (T1, T2, T3, T4) un profilé.
